(19) **Europäisches Patentamt**
**European Patent Office**
**Office européen des brevets**

(11) **EP 4 506 409 A1**

(12) **EUROPEAN PATENT APPLICATION**

(43) Date of publication:
**12.02.2025 Bulletin 2025/07**

(21) Application number: **23196481.8**

(22) Date of filing: **11.09.2023**

(51) International Patent Classification (IPC):
**C08L 23/08** (2025.01)

(52) Cooperative Patent Classification (CPC):
(C-Sets available)
**C08L 23/0815; C08J 3/226; H01M 4/668;**
**H01M 8/0221; H01M 8/0226;** C08J 2323/08;
C08J 2423/08; C08K 2201/001; C08K 2201/003;
C08K 2201/006; C08K 2201/014; H01M 6/182
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.08.2023 US 202363517954 P**

(71) Applicant: **SHPP Global Technologies B.V.**
**4612 PX Bergen op Zoom (NL)**

(72) Inventors:
• **SILVI, Norberto**
**Selkirk, 12158 (US)**
• **THOMPSON, Walter**
**Wilmington, 19810 (US)**

(74) Representative: **Modiano, Gabriella Diana et al**
**Modiano & Partners SA**
**Steinsdorfstraße 14**
**80538 München (DE)**

(54) **HIGHLY ELECTRICALLY CONDUCTIVE COMPOUNDS CONTAINING HDPE AND CARBON NANOTUBES FOR BATTERY ELECTRODE PLATES**

(57) Thermoplastic compositions include: from about 35 wt% to about 70 wt% of a polymer resin, wherein the polymer resin comprises at least two polymer resins, wherein at least one of the polymer resins includes a high density polyethylene (HDPE) polymer having a degree of crystallinity of at least 47% as measured by differential scanning calorimetry (DSC); from about 10 wt% to about 40 wt% synthetic graphite; from about 5 wt% to about 15 wt% carbon nanotubes (CNTs); and from about 3 wt% to about 15 wt% conductive carbon black powder.

FIG. 1

EP 4 506 409 A1

(52) Cooperative Patent Classification (CPC): (Cont.)

C-Sets
**C08L 23/0815, C08L 23/0815, C08K 3/041,
C08K 3/04**

**Description**

**FIELD OF THE DISCLOSURE**

The present disclosure relates to thermoplastic compositions including high density polyethylene and several forms of carbon filler that have good volume electrical resistivity and mechanical properties.

**BACKGROUND OF THE DISCLOSURE**

Zinc-bromine batteries were conceived in the late 1800's - see, e.g., U.S. Patent 312,812 (granted in 1885 to Bradley). Development of commercial zinc-bromine batteries has lagged due to: (1) the tendency of zinc to form dendrites upon deposition, which may short circuit the cell; and (2) the high solubility of bromine in the aqueous zinc bromide electrolyte, which allows diffusion and direct reaction with the zinc electrode, resulting in self-discharge of the cell. It is important to control the pH of the electrolyte to reduce zinc corrosion rate and mossy zinc deposits. These problems are discussed in "Zinc/Bromine Batteries," Paul C. Butler et al., Report No. SAND2000-0893, pp. 37-1, 3, 6 (2000).

The search for carbon-plastic electrode composites to use as electrode plates in zinc bromide batteries started in the late 1970s. U.S. Patent 4,169,816 ('816 Patent) by Exxon Research & Engineering, for example, describes a homogeneous blend of a crystalline polypropylene-ethylene copolymer, an electrically conductive carbon black, a small quantity of silica, and a fiber-reinforcing agent selected from carbon fibers and mixtures of carbon and glass fibers. The composition was reported to have excellent strength, good extrudability, excellent volume resistivity (1 Ohm.cm), and good impermeability. This patent suggests that to impart electrical conductivity, the composition should contain at least 15 parts by weight of a finely divided conductive carbon powder per hundred parts (pph) of the copolymer. It also states that 35 pph of the conductive carbon should not be employed; otherwise, the composition is too brittle and also less easily extrudable into thin nonporous sheets. Also, increasing the amount of carbon to about 35 pph tends to increase the permeability of the thin sheets manufactured from such compositions to liquids such as bromine, as an example. It is preferred that the finely divided conductive carbon black has a surface area greater than about 500 $m^2/g$, such as those manufactured under the tradename Ketjen Black EC.

Johnson Controls began research into plastic-carbon electrodes in the 1990s, reporting at the time that the polypropylene-ethylene copolymer based electrodes developed by Exxon were susceptible to oxidative attack, swelling and warpage. They explained that the mechanism behind the bromide attack was the vulnerability of tertiary hydrogens in the backbone of the propylene chain. To circumvent this problem Johnson Controls selected high density polyethylene (HDPE) homopolymer, which eliminates most, if not all, tertiary hydrogens on the backbone chain. Johnson Controls reported positive results in aging studies with the base polymer substitution; HDPE was superior to EP Copolymer.

Globe-Union Inc. (a Johnson Controls subsidiary) patented an HDPE-based carbon-plastic electrodes in December 1992. U.S. Patent 5,173,362 ('362 Patent) describes compositions for electrode systems, particularly those to be used for bipolar electrodes in zinc-bromine batteries. These compositions preferably include carbon-black as a conductive filler in a polymeric matrix, with reinforcing materials such as glass fibers. The warpage of the zinc-bromine electrodes experienced in the prior art, and which was believed to be caused by physical expansion of the electrodes due to bromine absorption by the material of the electrode, was substantially eliminated in the compositions and fabrication processes described in this patent. In this patent, materials were prepared using a lamination process, known as glass-mat reinforced thermoplastics technology or, in a different embodiment, the substrate is made using a slurry process. Bromination, unlike chlorination, is extremely selective to the chemistry of the polymer matrix used, and the tertiary hydrogens of polypropylene systems react approximately twenty thousand times faster with bromine than the secondary hydrogens in polyethylene. Three carbon blacks were used in the described compositions, but the Ketjenblack EC-300J grade offered the best combination of electrical conductivity and processability properties for the amount of carbon used.

The '362 Patent broadly describes carbon black and fiber loading ranges of from 5-40 wt% and 10-70 wt%, respectively. However, the exemplified compositions (Table 4) describe carbon loadings of 18 wt% (identical to the Exxon '816 Patent), so it is believed that the carbon and fiber loadings used in the '362 Patent are close to those described in the '816 Patent.

International (PCT) Publication WO 2022/195511, filed by SHPP Global Technologies, describes thermoplastic compositions having high electrical conductivity, and in particular to polyethylene-based compositions including graphite filler and carbon black powder that are suitable for use in battery electrode applications. The described materials have good chemical resistance and electrical conductivity.

Another SHPP application, International Application No. PCT/IB2023/054050, describes highly filled plastic materials used to replace metals in electrode plates of flow and no-flow batteries that operate at relatively high temperatures. These materials include at least one polyphenylene sulfide (PPS) and mixtures of synthetic graphite, carbon nanotubes and conductive carbon black in different ratios.

While formulations containing different sources of carbon have been described in the prior art, none showed the balance of electrical conductivity, chemical resistance, and processability required to manufacture thin sheets for battery electrode plates using conventional extrusion or molding processes.

These and other shortcomings are addressed by aspects of the present disclosure.

## SUMMARY

Aspects of the disclosure relate to thermoplastic compositions including: from about 35 wt% to about 70 wt% of a polymer resin, wherein the polymer resin comprises at least two polymer resins, wherein at least one of the polymer resins includes a high density polyethylene (HDPE) polymer having a degree of crystallinity of at least 47% as measured by differential scanning calorimetry (DSC); from about 10 wt% to about 40 wt% synthetic graphite; from about 5 wt% to about 15 wt% carbon nanotubes (CNTs); and from about 3 wt% to about 15 wt% conductive carbon black powder. The combined weight percent value of all components does not exceed 100 wt%, and all weight percent values are based on the total weight of the composition.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 is a graph showing modulus of elasticity properties for comparative and example compositions according to aspects of the disclosure.

FIG. 2 is a graph showing tensile stress at break properties for comparative and example compositions according to aspects of the disclosure.

FIG. 3 is a graph showing flexural modulus properties for comparative and example compositions according to aspects of the disclosure.

FIG. 4 is a graph showing flexural stress at break properties for comparative and example compositions according to aspects of the disclosure.

FIG. 5 is a graph showing melt viscosity properties for comparative and example compositions according to aspects of the disclosure.

FIG. 6 is a graph showing specific gravity properties for comparative and example compositions according to aspects of the disclosure.

FIG. 7 is a graph showing volume electrical resistivity properties for comparative and example compositions according to aspects of the disclosure.

## DETAILED DESCRIPTION

The present disclosure relates to highly-filled plastic materials used to replace metallic electrode plates of flow and no-flow batteries, such as zinc bromide and vanadium redox batteries. These materials include at least one high density polyethylene and mixtures of synthetic graphite, carbon nanotubes and conductive carbon black in different ratios. Desirable properties for these compounds may include electrical conductivity, chemical resistance, and processability into thin plastic sheets using conventional polymer processing methods. Another potential use of these formulations is in the replacement of metals and metalized polymeric materials in the EMI shielding of coaxial cables, cell phones, computers, laptops, monitors, and other sensitive electronic equipment requiring isolation from outside electromagnetic fields.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polymer resin" includes mixtures of two or more polymer resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

The present disclosure describes highly filled plastic materials comprising at least one high density polyethylene and mixtures of synthetic graphite, carbon nanotubes and conductive carbon black in different ratios. The use of carbon nanotubes in these compositions should allow for the reduction of the graphite and carbon black loadings, thus producing materials of similar electrical conductivity but of improved flow compared to compositions containing only graphite and carbon powder. Three desirable properties for these compounds include electrical conductivity, chemical resistance, and processability into thin plastic sheets using conventional polymer processing methods. One of the polymers used in the compositions of this invention was Formolene® HL5010, an extra high molecular weight ethylene-hexene copolymer having a density of 0.949 g/cm$^3$ (ASTM D1505), a chemical resistance (ESCR) in 100% Igepal (ASTM D1693) of at least 600 hours, a melt flow rate (MFR) at 190 °C and 21.60 kg (ASTM D1238) of 10 g/10 min, and a degree of crystallinity of about 61.5% when tested by DSC. This polymer showed excellent chemical resistance when tested, for example, at 60 °C in a zinc bromide-based electrolyte solution used in Redox non-flow batteries. A synthetic high purity graphite, carbon nanotubes, and a highly conductive carbon black powder are used as fillers to impart electrical conductivity to the formulations of this disclosure. These HDPE-CNT-graphite-carbon compositions may be injection molded into plaques to produce samples for ASTM testing.

It was found through experimentation that the choice of polymer matrix affected the chemical resistance of the composition to the electrolyte solution used in a non-flow Redox battery, with low density polyethylenes showing, in general, a poor response to the environmental conditions encountered by the electrode plate material inside the battery. It was found that copolymers of high density polyethylene and hexene of at least 45% crystallinity showed excellent resistance to zinc bromide at the operating temperatures of the battery. The graphite used in the example compositions, TIMREX® KS44, is a highly crystalline material of high purity, which is produced at ultra-high temperatures that vaporize impurities such as metal oxides, sulfur, iron, aluminum and many others to render a greater than 99% pure carbon synthetic graphite of different particle size. A carbon black suitable for use in compositions of the disclosure is Ketjenblack EC-300J, which has a primary/basic particle size of about 40 nm, with aggregates of several hundreds of nanometers in size, and agglomerates as large as 100-200 microns. The BET surface area of this carbon black is about 800 $m^2$/gr (ASTM D3037), and the Oil Absorption Number (OAN) is about 365 ml/100g when tested according to ASTM D2414.

It is desirable to select a carbon black powder within a certain range of particle sizes to balance electrical conductivity with processability in the melt. Carbon powders of small particle size (large surface area), for example, are electrically conductive but difficult to process, whereas carbon powders of large particle size (small surface area) are easily processable but usually show poor electrical conductivity.

Carbon nanotubes (CNTs) suitable for use in aspects of the disclosure include, but are not limited to, PLASTICYL™ HDPE1501 CNTs from Nanocyl. The CNTs impart electrical conductivity to the described compositions, and are provided in a form of a custom-made HDPE-based masterbatch that includes 15 percent by weight of NC7000 multiwall carbon nanotubes. Typical loadings for static dissipative applications are around 2% to 3% of carbon nanotubes in the final compound. The conductivity for a given loading depends primarily on the compounding conditions, the viscosity of the basic resin and the dilution equipment. NANOCYL® nanotubes are thin, multi-wall carbon structures produced with a Catalytic Chemical Vapor Deposition (CCVD) process. The carbon structures are tube-shaped materials, composed of carbon atoms having a nanometer size diameter. The graphite layers can be visualized somewhat like a rolled-up chicken wire with a continuous unbroken hexagonal mesh and carbon atoms at the apexes of the hexagons. With action of van der Waals forces, carbon nanotubes have a tendency to cluster into bundles or agglomerates. Consequently, carbon nanotubes look like a black powder. At nanoscale, however, they have a spaghetti-like structure. These nanotubes have an average diameter of about 10 nm, a length of 1.5 micron, a surface area of 250-300 $m^2$/gr, and a volume resistivity of $10^{-4}$ Ohm.cm.

The main advantage of carbon nanotubes is that they have less of an effect on the mechanical properties of the composition as compared to other conductive fillers such as carbon black and graphite. This is due to their high aspect ratio resulting in a relatively low amount of nanotubes needed to reach a specific electrical conductivity. CNT-based compositions typically have a higher viscosity than carbon black-based compositions at an equal loading, but because lower quantities of CNTs are required for the same conductive effect, it may be easier to process compositions including CNTs. The main benefits of the use of carbon nanotubes include, but are not limited to, high electrical conductivity, good melt processability, retention of key mechanical properties, good recyclability, and thermal dissipation.

In some applications, the amount of carbon nanotubes present in the masterbatch may not be enough to reach the extremely low electrical resistivity required by the application. In these cases, the effect produced by the nanotubes is complemented by adding a combination of graphite and carbon black powders in different proportions. These CNT/graphite/carbon powder ratios are selected so that an optimal balance between electrical conductivity and flow/processability can be maintained. Since graphite is more chemically stable to halide attack than other forms of carbon - such as in the case of zinc bromide redox flow and no-flow batteries - for the battery to function properly a certain amount of graphite filler may be included in the formulation used to make the electrode plates of the battery. It would be desirable to reduce the CNT content used in the formulation to reduce the cost of the final product. The HDPE-MWCNT masterbatch used in the materials of this disclosure may be diluted with a fixed amount of fresh, unfilled Formolene® HL5010 high density polyethylene. The amount of masterbatch used in the compositions of this disclosure may vary from 45-100 wt%, and the amount of fresh HDPE resin may be maintained 15 wt% in those formulations in which Formolene® HL5010 is used as a secondary polymer. These polymer/masterbatch ratios may result in compositions including from about 6.75 wt% to about 15 wt% of CNTs in the final formulation. Since polymer-CNT masterbatches are often produced using a low molecular weight polymer matrix to facilitate the dispersion of nanotubes into the polymer, the addition of Formolene® HL5010, an extra high molecular weight copolymer, as a secondary polymer in these compositions may lead to an improvement of the chemical resistance of the resulting material to the electrolyte solution used in the battery and an improvement of the impact strength and ductility of the final composition.

In some aspects, a synthetic, high purity graphite and a carbon black powder of relatively high surface area may be used in combination with carbon nanotubes to impart electrical conductivity to the formulation. These HDPE-based compositions may be injection molded into plaques and tested for physical and electrical properties.

## Thermoplastic Compositions

In some aspects, a thermoplastic composition includes: (a) from about 35 wt% to about 70 wt% of a polymer resin; from about 10 wt% to about 40 wt% synthetic graphite; (c) from about 5 wt% to about 15 wt% carbon nanotubes (CNTs); and from about 3 wt% to about 15 wt% conductive carbon black powder. The polymer resin includes at least two polymer resins, with at least one of the polymer resins including a high density polyethylene (HDPE) polymer having a degree of crystallinity of at least 47% as measured by differential scanning calorimetry (DSC). The combined weight percent value of all components does not exceed 100 wt%, and all weight percent values are based on the total weight of the composition.

In certain aspects the HDPE polymer has a degree of crystallinity of at least 48%, or at least 49%, or at least 50%, or at least 51%, or at least 52%, or at least 53%, or at least 54%, or at least 55%, or at least 56%, or at least 57%, or at least 58%, or at least 59%, or at least 60%, or at least 61%, as measured by DSC.

In further aspects the HDPE has a density of at least 0.939 grams per cubic centimeter ($g/cm^3$) as determined according to ASTM D1505. In specific aspects the HDPE has a density of at least 0.940 $g/cm^3$, or at least 0.941 $g/cm^3$, or at least 0.942 $g/cm^3$, or at least 0.943 $g/cm^3$, or at least 0.944 $g/cm^3$, or at least 0.945 $g/cm^3$, or at least 0.946 $g/cm^3$, or at least 0.947 $g/cm^3$, or at least 0.948 $g/cm^3$, as determined according to ASTM D1505.

Exemplary HDPE polymers that may be suitable for use in aspects of the disclosure include, but are not limited to, Formolene® HL5010 (Formosa Plastics), Marlex® HHM 4903 (Chevron Phillips), and Unival™ DMDA-6147 (Dow). Properties for the Formolene® and Marlex® HDPEs are listed in Table 2. The DMDA-6147 HDPE has a density of 0.948 $g/cm^3$, a degree of crystallinity of 59.4%, an MFR of 10 g/10 min (190 °C, 21.6 Kg, ASTM D1238), and an ESCR of greater than 1500 hours (100% Igepal, ASTM D1693). The degree of crystallinity for DMDA-6147 is calculated according to the formula:

$$\% \text{ Crystallinity} = 720.69 \text{ x Density} - 623.82.$$

In certain aspects the composition includes from about 5 wt% to about 30 wt% of the HDPE polymer having a degree of crystallinity of at least 47%. In certain aspects the composition includes at least 5 wt%, or at least 10 wt%, or at least 15 wt%, or less than 30 wt%, or less than 25 wt%, or less than 20 wt%, of the HDPE polymer having a degree of crystallinity of at least 47%.

In some aspects the synthetic graphite includes at least 50% particles having a particle diameter of from 4 micron ($\mu$m) to 75 $\mu$m as determined by laser diffraction. In further aspects the synthetic graphite includes at least 55%, or at least 60%, or at least 65%, or at least 70%, or at least 75%, or at least 80% particles having the recited particle diameter. In specific aspects the particles have a diameter of from 4 $\mu$m to 70 $\mu$m, or from 4 $\mu$m to 65 $\mu$m, or from 4 $\mu$m to 60 $\mu$m, or from 4 $\mu$m to 55 $\mu$m, or from 4 $\mu$m to 50 $\mu$m, or from 5 $\mu$m to 75 $\mu$m, or from 6 $\mu$m to 75 $\mu$m, or from 7 $\mu$m to 75 $\mu$m, or from 8 $\mu$m to 75 $\mu$m, or from 9 $\mu$m to 75 $\mu$m, or from 10 $\mu$m to 75 $\mu$m, or from 11 $\mu$m to 75 $\mu$m, or from 12 $\mu$m to 75 $\mu$m, or from 13 $\mu$m to 75 $\mu$m, or from 14 $\mu$m to 75 $\mu$m, or from 15 $\mu$m to 75 $\mu$m, as determined by laser diffraction. In certain aspects it is desirable to select graphite particles within a certain range of diameters. Small graphite particles may be too reinforcing, leading to compounds of relatively high viscosity that are difficult to process using conventional melt processes. Large graphite particles, on the other hand, may be difficult to disperse into a homogeneous mixture with the polymer, especially in those cases when the polymer is of relatively high molecular weight.

In other aspects the synthetic graphite has a specific surface area (SSA) of from greater than 5 square meters per gram ($m^2/g$) to less than 26 $m^2/g$ as determined according to a Brunauer, Emmett and Teller (BET) analysis. In some aspects the synthetic graphite has a SSA of at least 6 $m^2/g$, or at least 7 $m^2/g$, or at least 8 $m^2/g$, or at least 9 $m^2/g$, or at least 10 $m^2/g$, or less than 25 $m^2/g$, or less than 24 $m^2/g$, or less than 23 $m^2/g$, or less than 22 $m^2/g$, or less than 21 $m^2/g$, or less than 20 $m^2/g$, as determined according to a BET analysis.

In further aspects the synthetic graphite has a purity level of at least 99.5 wt%.

The composition in some aspects includes less than 49 wt% carbon filler, wherein the carbon filler includes the synthetic graphite, the CNTs and the conductive carbon black powder. In particular aspects the composition includes less than 48% carbon filler, or less than 47 wt% carbon filler, or from 35 wt% to less than 49 wt% carbon filler, or from 36 wt% to less than 49 wt% carbon filler, or from 37 wt% to less than 49 wt% carbon filler, or from 38 wt% to less than 49 wt% carbon filler, or from 39 wt% to less than 49 wt% carbon filler, or from 40 wt% to less than 49 wt% carbon filler, or from 41 wt% to less than 49 wt% carbon filler.

In some aspects thermoplastic compositions according to aspects of the disclosure have a volume resistivity of less than 0.45 Ohm.cm as measured according to ASTM D991. In other aspects the compositions have a volume resistivity of less than 0.40 Ohm.cm, or less than 0.35 Ohm.cm, or less than 0.30 Ohm.cm, or less than 0.25 Ohm.cm, or less than 0.20 Ohm.cm, or less than 0.19 Ohm.cm, or less than 0.18 Ohm.cm, as measured according to ASTM D991.

In further aspects the composition has improved chemical resistance against zinc bromide corrosion as compared to a comparative composition that includes a polyethylene polymer that does not have the recited degree of crystallinity and/or density properties. Bromine is highly corrosive and can break the carbon-carbon bonds of the polymer, generating acid groups that lower the pH of the electrolyte making it more acidic, and therefore more corrosive. As explained in the '362 Patent (referenced above), it was found that the secondary hydrogens in HDPE were much more resistive to bromination than the tertiary hydrogens of polypropylene ('362 Patent, col. 2, line 56-col. 3 line 2). Specifically, the '362 Patent found that the DMDA 6147 HDPE (discussed above) had suitable chemical resistance against zinc bromide corrosion. Accordingly, HDPE having the degree of crystallinity and/or density properties described herein were selected for use in the compositions of the disclosure.

Thermoplastic compositions according to aspects of the disclosure may have improved processing properties as compared to conventional compositions. In certain aspects, the thermoplastic composition is processable into sheets having a width of at least 7 inches (in) and a thickness of 1 millimeter (mm) or less using conventional melt extrusion methods. In specific aspects the sheets have a thickness of less than 0.9 mm, or less than 0.8 mm, or less than 0.7 mm, or less than 0.6 mm, or from 0.4 mm to 1 mm.

In a certain aspect the composition includes: from about 10 wt% to about 20 wt% of the HDPE polymer; from about 25 wt% to about 40 wt% of the synthetic graphite; and from about 5 wt% to about 10 wt% CNTs.

Thermoplastic compositions according to aspects of the disclosure may have one or more of the following mechanical properties:

> a modulus of elasticity of at least 4000 MPa as measured according to ASTM D638;
> a tensile stress at break of at least 30.5 MPa as measured according to ASTM D638;
> a flexural modulus of at least 2600 MPa as measured according to ASTM D790;
> a flexural stress at break of at least 45 MPa as measured according to ASTM D790; or
> a specific gravity of at least 1.24 as measured according to ASTM D792.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230 °C and about 350 °C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, metallic electrode plates of flow and no-flow batteries, such as zinc bromide and vanadium redox batteries. In further aspects the article is a bipolar plate of a fuel cell or a sheet of a plate heat exchanger. In yet further aspects the article may replace metals and metalized polymeric materials in the EMI shielding of coaxial cables, cell phones, computers, laptops, monitors, and other sensitive electronic equipment requiring isolation from outside electromagnetic fields.

In certain aspects the article is a sheet having a thickness of 1 mm or less. In specific aspects the sheet has a thickness of less than 0.9 mm, or less than 0.8 mm, or less than 0.7 mm, or less than 0.6 mm, or from 0.4 mm to 1 mm.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

from about 35 wt% to about 70 wt% of a polymer resin, wherein the polymer resin comprises at least two polymer resins, wherein at least one of the polymer resins comprises a high density polyethylene (HDPE) polymer having a degree of crystallinity of at least 47% as measured by differential scanning calorimetry (DSC);
from about 10 wt% to about 40 wt% synthetic graphite;
from about 5 wt% to about 15 wt% carbon nanotubes (CNTs); and
from about 3 wt% to about 15 wt% conductive carbon black powder,
wherein the combined weight percent value of all components does not exceed 100 wt%, and all weight percent values are based on the total weight of the composition.

Aspect 2. The thermoplastic composition according to Aspect 1, wherein the HDPE has a degree of crystallinity of at least 55% as measured by differential scanning calorimetry (DSC).

Aspect 3. The thermoplastic composition according to Aspect 1 or 2, wherein the HDPE has a density of at least 0.939 g/cm$^3$ as determined according to ASTM D1505.

Aspect 4. The thermoplastic composition according to any of Aspects 1 to 3, wherein the synthetic graphite comprises at least 50% particles having a particle diameter of from 4 micron ($\mu$m) to 75 $\mu$m as determined by laser diffraction.

Aspect 5. The thermoplastic composition according to any of Aspects 1 to 4, wherein the synthetic graphite has a specific surface area of from greater than 5 m$^2$/g to less than 26 m$^2$/g as determined according to a Brunauer, Emmett and Teller (BET) analysis.

Aspect 6. The thermoplastic composition according to any of Aspects 1 to 5, wherein the synthetic graphite has a purity level of at least 99.5 wt%.

Aspect 7. The thermoplastic composition according to any of Aspects 1 to 6, wherein the composition comprises less than 49 wt% carbon filler, wherein the carbon filler comprises the synthetic graphite, the CNTs and the conductive carbon black powder.

Aspect 8. The thermoplastic composition according to any of Aspects 1 to 7, wherein the composition has a volume resistivity of less than 0.45 Ohm.cm as measured according to ASTM D991.

Aspect 9. The thermoplastic composition according to any of Aspects 1 to 8, wherein the composition has improved chemical resistance against zinc bromide corrosion as compared to a comparative composition that includes a polyethylene polymer having a degree of crystallinity of less than 47% instead of the HDPE polymer having a degree of crystallinity of at least 47%.

Aspect 10. The thermoplastic composition according to any of Aspects 1 to 9, wherein the composition is processable into sheets having a width of at least 7 in and a thickness of 1 mm or lower using conventional melt extrusion methods.

Aspect 11. The thermoplastic composition according to any of Aspects 1 to 10, wherein the composition comprises from about 5 wt% to about 30 wt% of the high density polyethylene (HDPE) polymer having a degree of crystallinity of at least 47%.

Aspect 12. The thermoplastic composition according to any of Aspects 1 to 11, wherein the composition comprises:

from about 10 wt% to about 20 wt% of the HDPE polymer having a degree of crystallinity of at least 47%;
from about 25 wt% to about 40 wt% of the synthetic graphite; and
from about 5 wt% to about 10 wt% CNTs.

Aspect 13. The thermoplastic composition according to any of Aspects 1 to 12, wherein the composition has:

a modulus of elasticity of at least 4000 MPa as measured according to ASTM D638;
a tensile stress at break of at least 30.5 MPa as measured according to ASTM D638;
a flexural modulus of at least 2600 MPa as measured according to ASTM D790;
a flexural stress at break of at least 45 MPa as measured according to ASTM D790; or
a specific gravity of at least 1.24 as measured according to ASTM D792.

Aspect 14. An article comprising the composition according to any of Aspects 1 to 13.

Aspect 15. The article according to Aspect 14, wherein the article is a sheet having a thickness of 1 mm or lower.

Aspect 16. The article according to Aspect 14 or 15, wherein the article is a battery electrode plate, a bipolar plate of a fuel cell, or a sheet of a plate heat exchanger.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components set forth in Table 1:

### Table 1 - Components

| Component | Description | Trade name/Source |
|---|---|---|
| HDPE-CNT MB | High density polyethylene (HDPE)-carbon nanotube (CNT) masterbatch (MB), 15 wt% CNTs | PLASTICYL™ HDPE1501, Nanocyl |
| HDPE | HDPE Resin, see the Formolene® HL5010 properties in Table 2 | Formolene® HL5010, Formosa Plastics |
| Graphite | Synthetic high surface area, high purity graphite filler | TIMREX® KS44, Imerys |
| CB | Carbon black powder | Ketjenblack EC-300J, Nouryon |

Table 2 lists some polyethylene resins that were evaluated for compositions according to aspects of the disclosure:

### Table 2 - PE Resins

| Resin | Formolene® HL5010 | Marlex® HHM 4903 | Primatop® MDPE 003938 |
|---|---|---|---|
| Description | (UHMW) HDPE-Hexene Copolymer | (HMW) HDPE-Hexene Copolymer | Medium Density PE Hexene Copolymer |
| Density (g/cm$^3$), ASTM D1505 | 0.949 | 0.949 | 0.938 |
| MFR (g/10min) at 190 °C, 2.16 Kg, ASTM D1238 | | 0.29 | 0.30 |
| MFR (g/10min) at 190 °C, 21.6 Kg, ASTM D1238 | 10 | | 20-30 |
| Environmental Stress Cracking Resistance (ESCR) (hrs), 100% Igepal, ASTM D1693 | > 600 | > 1000 | >800 |
| Degree of Crystallinity by differential scanning calorimetry (DSC) (%) | 61.5 | 58.6 | 46.6 |

The Formolene and Marlex HDPE's have sufficient density and degree of crystallinity to be suitable for use in aspects of the disclosure. The Primatop MDPE has better flow properties than the Formolene HDPE, but it also has low density and degree of crystallinity properties. It is assumed that this polymer would have poor chemical resistance against bromination, making it unsuitable for use in applications such as zinc-bromide battery electrode plates. Accordingly, polyethylenes having a higher density and/or degree of crystallinity are more suitable for compositions according to aspects of the disclosure.

Various types of graphite filler were evaluated, as shown in Table 3:

**Table 3 - Graphite Fillers**

| Graphite Filler | Asbury 1125 | | Timrex® KS44 | | Timrex® KS4 | |
|---|---|---|---|---|---|---|
| Type of graphite | Synthetic | | Synthetic | | Synthetic | |
| Particle size analysis<br><br>Method:<br>U.S. Standard Test Sieves (Asbury 1125)<br>Laser Diffraction (Timrex® KS44 and Timrex® KS4) | +50 mesh (300 $\mu$m) | 0.67% | D10<br><br>D50<br>D90 | 4.1 $\mu$m<br><br>15.8 $\mu$m<br>44.8 $\mu$m | D10<br><br>D50<br>D90 | 1.2 $\mu$m<br><br>2.4 $\mu$m<br>4.3 $\mu$m |
| | +100 mesh (150 $\mu$m) | 34.68% | | | | |
| | +200 mesh (75 $\mu$m) | 37.85% | | | | |
| | +325 mesh (44 $\mu$m) | 6.64% | | | | |
| | -325 mesh (44 $\mu$m) | 20.16% | | | | |
| Specific Surface Area (BET) ASTM D3037 | 5 m$^2$/g | | 9 m$^2$/g | | 26 m$^2$/g | |
| Impurity level | High (only 91.63% carbon) | | Low (> 99.5% carbon) | | Low (> 99.5% carbon) | |

The graphite was selected to balance its electrical conductivity properties with flow/processability. Synthetic graphite Asbury 1125 was not suitable due to its large average particle size (-75% of particles having a size of from 75-150 $\mu$m) and relatively high impurity level. The Timrex® KS44 synthetic graphite has a purity level of at least 99.5 wt% with less than 0.5 wt% impurities. The Timrex® KS4 synthetic graphite had low impurity levels but its average particle size was too low (D90 of approximately 4 $\mu$m) for the desired application. It is desirable for the graphite to have a relatively larger particle size than the other carbon fillers used in the described compositions; in terms of specific surface area, graphite has the largest particle size, followed by carbon nanotubes and finally carbon black powder. This mixture of different sized particles (multi-modal distribution of particles) increases the volume fraction for maximum packing of carbon filler in the resin. Compared to a mono-modal distribution of particles (all particles are of the same size), the mixing of particles of different sizes leads to the reduction of the viscosity of the final composition for the same total carbon content, which enhances the flow and processability of the material. Accordingly, a synthetic graphite having medium particle size (80% of particles between 4 and 45 $\mu$m) was selected for the compositions described herein.

Compositions were prepared according to the formulations set forth in Table 4:

**Table 4 - Comparative and Example Compositions**

| Component | C1.1 | C1.2 | C1.3 | C1.4 | C1.5 | Ex1.1 | Ex1.2 | Ex1.3 | Ex1.4 | Ex1.5 |
|---|---|---|---|---|---|---|---|---|---|---|
| HDPE-CNT-MB | 100 | 90 | 80 | 70 | 60 | 45 | 45 | 45 | 45 | 45 |
| HDPE | | | | | | 15 | 15 | 15 | 15 | 15 |
| Graphite | | 5 | 12.5 | 20 | 28 | 35 | 33 | 31 | 29 | 27 |
| CB | | 5 | 7.5 | 10 | 12 | 5 | 7 | 9 | 11 | 13 |
| Total (wt%) | 100 | 100 | 100 | 100 | 100 | 100 | 100 | 100 | 100 | 100 |
| | | | | | | | | | | |
| Total polymer blend (wt%) | 100 | 90 | 80 | 70 | 60 | 60 | 60 | 60 | 60 | 60 |

(continued)

| Component | C1.1 | C1.2 | C1.3 | C1.4 | C1.5 | Ex1.1 | Ex1.2 | Ex1.3 | Ex1.4 | Ex1.5 |
|---|---|---|---|---|---|---|---|---|---|---|
| Total carbon filler (wt%) | | 10 | 20 | 30 | 40 | 40 | 40 | 40 | 40 | 40 |
| Total CNT (wt%) | 15 | 13.5 | 12 | 10.5 | 9 | 6.75 | 6.75 | 6.75 | 6.75 | 6.75 |
| Total carbon filler including CNTs (wt%) | 15 | 23.5 | 32 | 40.5 | 49 | 46.75 | 46.75 | 46.75 | 46.75 | 46.75 |

The compositions of Table 4 were compounded, and all compositions except C1.5 were extrudable. Comparative composition C1.5, which included 28 wt% graphite and 12 wt% carbon black, was not extrudable, as the strands were rough to the touch and visibly rough, and the extruded strands were surging constantly at the die and any tension on the strands caused them to snap. A sample of composition C1.5 could not be collected for molding and testing.

The following extrusion conditions were used:

- Feed rate (in pounds per hour, lb/hr): 20 for C1.2, C1.3, and C1.4; 25 for Ex1.1, Ex1.2, Ex.1.3, Ex1.4 and Ex1.5.
- Screw speed (in revolutions per minute, RPM): 300.
- Torque (%): 81 (C1.2); 79 (C1.3, C1.4); 75 (Ex1.1, Ex1.2); 77 (Ex1.3); 81 (Ex1.4); and 86 (Ex1.5).
- Vent (die-end, Barrel 10) (inches mercury, in Hg) (all compositions): 20.
- Temperature profile (°F) (all compositions): 550 (Zone 1); 570 (Zones 2-9); and 570 (die).
- The HDPE polymer and the HDPE-CNT masterbatch were both fed at the feed throat of the extruder in barrel 1, the carbon black was fed in barrel 4, and the graphite was fed in barrel 6.

Various properties of the extruded compositions were evaluated; results are set forth in Tables 5A and 5B:

**Table 5A - Properties of Compositions C1.1-C1.4**

| Property | Standard | Unit | C1.1 | C1.2 | C1.3 | C1.4 |
|---|---|---|---|---|---|---|
| Tensile Properties | ASTM D638 with Extensometer, uniaxial, 5 mm/min | | | | | |
| Modulus of Elasticity-Average (Avg) | | MPa | 1804 | 2398 | 3138 | 3890 |
| Stress at Break-Avg | | MPa | 23.2 | 29.4 | 30.2 | 30.2 |
| Elongation at Break-Avg | | % | 25 | 8.7 | 4.5 | 2.5 |
| Flexural Properties | ASTM D790, 3-point | | | | | |
| Flexural Modulus-Avg | | MPa | 1030 | 1350 | 1870 | 2530 |
| Flexural Stress at Break-Avg | | MPa | | | 44.5 | 44.2 |
| Impact Properties | ASTM D256, ASTM D4812, 23C | | | | | |
| Notched Izod Impact Strength-Avg | | J/m | 32.7 | 32.2 | 23.8 | 22.7 |
| Unnotched Izod Impact Strength-Avg | | J/m | 969 | 458 | 212 | 165 |
| Melt Mass-flow Rate (MFR)-Avg | ASTM D1238, 320 °C, 21.6 KG, 375 s dwell time | g/10 min | 21.1 | 11 | 2.64 | 0.63 |
| Melt Viscosity (MV), 280 °C, 1000 1/s | GEP multi point method | Pa·s | 325.55 | 349.77 | 415.95 | 511.2 |
| Specific Gravity-Avg | ASTM D792 | - | 1.035 | 1.09 | 1.152 | 1.221 |

(continued)

| Property | Standard | Unit | C1.1 | C1.2 | C1.3 | C1.4 |
|---|---|---|---|---|---|---|
| Tensile Properties | ASTM D638 with Extensometer, uniaxial, 5 mm/min | | | | | |
| Volume Resistivity-Avg | ASTM D991 | Ohm.cm | 0.924 | 0.508 | 0.228 | 0.0968 |

**Table 5B - Properties of Compositions Ex1.1-Ex1.5**

| Property | Standard | Unit | Ex1.1 | Ex1.2 | Ex1.3 | Ex1.4 | Ex1.5 |
|---|---|---|---|---|---|---|---|
| Tensile Properties | ASTM D638 with Extensometer, uniaxial, 5 mm/min | | | | | | |
| Modulus of Elasticity-Average (Avg) | | MPa | 4896 | 4774 | 4770 | 4684 | 4706 |
| Stress at Break-Avg | | MPa | 32.4 | 31.5 | 30.8 | 31.5 | 30.6 |
| Elongation at Break-Avg | | % | 3.2 | 3.1 | 2.7 | 2.4 | 2.1 |
| Flexural Properties | ASTM D790, 3-point | | | | | | |
| Flexural Modulus-Avg | | MPa | 3050 | 3080 | 3100 | 3110 | 3110 |
| Flexural Stress at Break-Avg | | MPa | 48 | 48.2 | 50.2 | 48.2 | 49.9 |
| Impact Properties | ASTM D256, ASTM D4812, 23C | | | | | | |
| Notched Izod Impact Strength-Avg | | J/m | 29.2 | 28.9 | 27.7 | 25.8 | 23.6 |
| Unnotched Izod Impact Strength-Avg | | J/m | 143 | 144 | 123 | 143 | 133 |
| Melt Mass-flow Rate (MFR)-Avg | ASTM D1238, 320 °C, 21.6 KG, 375 s dwell time | g/10 min | No flow | No flow | No flow | No flow | No flow |
| Melt Viscosity (MV), 280 °C, 1000 1/s | GEP multi point method | Pa·s | 450.72 | 492.9 | 524.33 | 601.71 | 655.09 |
| Specific Gravity-Avg | ASTM D792 | - | 1.288 | 1.284 | | 1.279 | 1.275 |
| Volume Resistivity-Avg | ASTM D991 | Ohm.cm | 0.170 | 0.149 | 0.1 | 0.0745 | - |

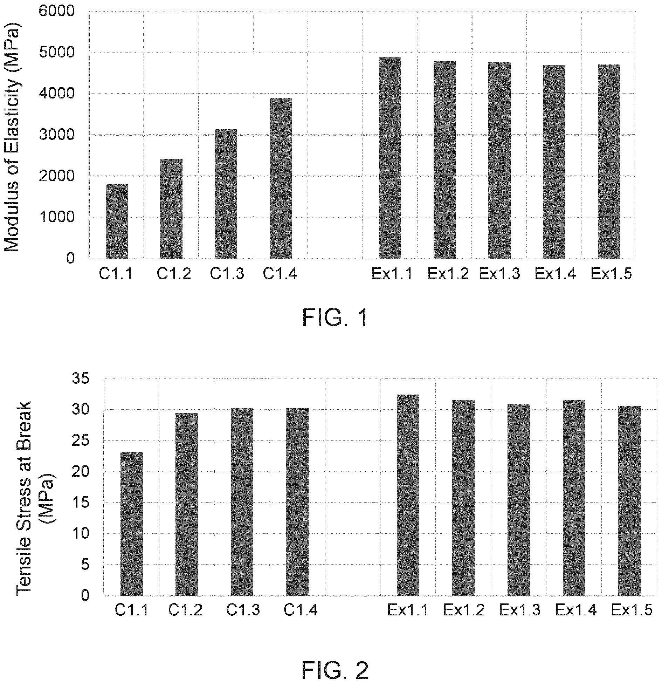

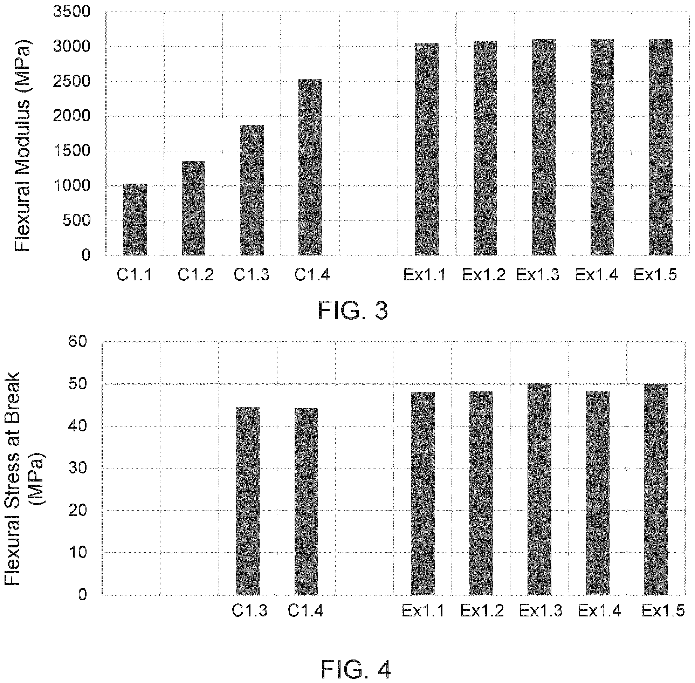

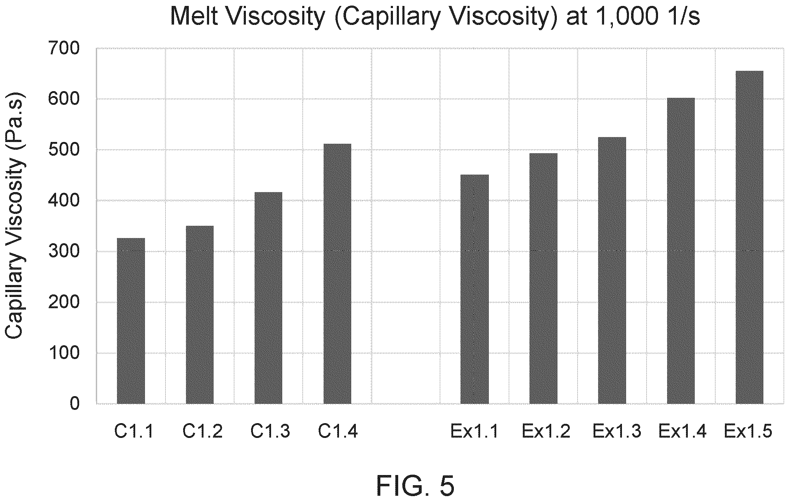

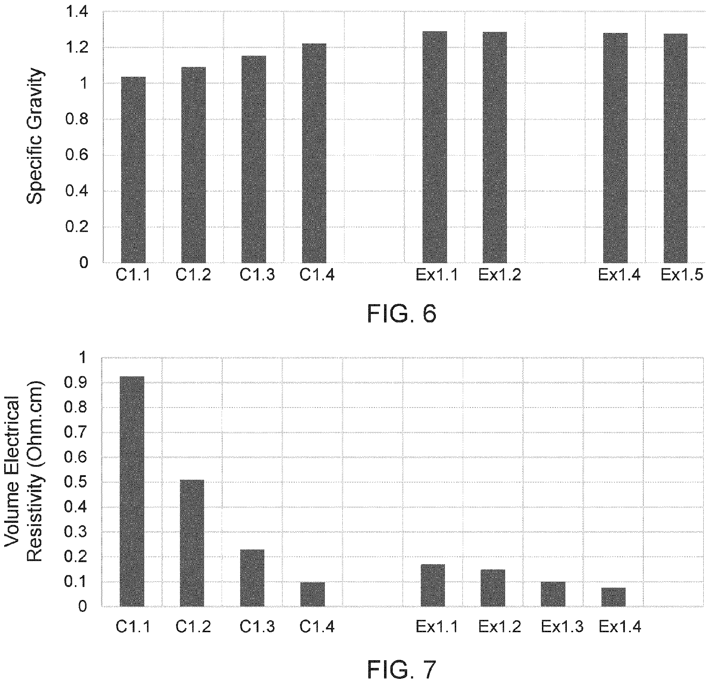

Graphical representation of various properties of the compositions are shown in FIGS. 1-7. As demonstrated in the figures and in Tables 5A and 5B, the compositions Ex1.1 to Ex1.5 of the present disclosure showed a modulus of elasticity (ASTM D638) of at least 4000 MPa, a tensile stress at break (ASTM D638) of at least 30.5 MPa, a flexural modulus (ASTM D790) of at least 2600 MPa, a flexural stress at break (ASTM D790) of at least 45 MPa, a specific gravity (ASTM D792) of at least 1.24, and a volume electrical resistivity (ASTM D991) not higher than 0.3 Ohm.cm.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

**Claims**

1. A thermoplastic composition comprising:

   from about 35 wt% to about 70 wt% of a polymer resin, wherein the polymer resin comprises at least two polymer resins, wherein at least one of the polymer resins comprises a high density polyethylene (HDPE) polymer having a degree of crystallinity of at least 47% as measured by differential scanning calorimetry (DSC);
   from about 10 wt% to about 40 wt% synthetic graphite;
   from about 5 wt% to about 15 wt% carbon nanotubes (CNTs); and
   from about 3 wt% to about 15 wt% conductive carbon black powder,
   wherein the combined weight percent value of all components does not exceed 100 wt%, and all weight percent values are based on the total weight of the composition.

2. The thermoplastic composition according to claim 1, wherein the HDPE has a degree of crystallinity of at least 55% as measured by differential scanning calorimetry (DSC).

3. The thermoplastic composition according to claim 1 or 2, wherein the HDPE has a density of at least 0.939 g/cm$^3$ as determined according to ASTM D1505.

4. The thermoplastic composition according to any of claims 1 to 3, wherein the synthetic graphite comprises at least 50% particles having a particle diameter of from 4 micron ($\mu$m) to 75 $\mu$m as determined by laser diffraction.

5. The thermoplastic composition according to any of claims 1 to 4, wherein the synthetic graphite has a specific surface area of from greater than 5 m$^2$/g to less than 26 m$^2$/g as determined according to a Brunauer, Emmett and Teller (BET) analysis.

6. The thermoplastic composition according to any of claims 1 to 5, wherein the synthetic graphite has a purity level of at least 99.5 wt%.

7. The thermoplastic composition according to any of claims 1 to 6, wherein the composition comprises less than 49 wt% carbon filler, wherein the carbon filler comprises the synthetic graphite, the CNTs and the conductive carbon black powder.

8. The thermoplastic composition according to any of claims 1 to 7, wherein the composition has a volume resistivity of less than 0.45 Ohm.cm as measured according to ASTM D991.

9. The thermoplastic composition according to any of claims 1 to 8, wherein the composition has improved chemical resistance against zinc bromide corrosion as compared to a comparative composition that includes a polyethylene polymer having a degree of crystallinity of less than 47% instead of the HDPE polymer having a degree of crystallinity of at least 47%.

10. The thermoplastic composition according to any of claims 1 to 9, wherein the composition is processable into sheets having a width of at least 7 in and a thickness of 1 mm or lower using conventional melt extrusion methods.

11. The thermoplastic composition according to any of claims 1 to 10, wherein the composition comprises from about 5 wt% to about 30 wt% of the high density polyethylene (HDPE) polymer having a degree of crystallinity of at least 47%.

12. The thermoplastic composition according to any of claims 1 to 11, wherein the composition comprises:

from about 10 wt% to about 20 wt% of the HDPE polymer having a degree of crystallinity of at least 47%;
from about 25 wt% to about 40 wt% of the synthetic graphite; and
from about 5 wt% to about 10 wt% CNTs.

13. The thermoplastic composition according to any of claims 1 to 12, wherein the composition has:

a modulus of elasticity of at least 4000 MPa as measured according to ASTM D638;
a tensile stress at break of at least 30.5 MPa as measured according to ASTM D638;
a flexural modulus of at least 2600 MPa as measured according to ASTM D790;
a flexural stress at break of at least 45 MPa as measured according to ASTM D790; or
a specific gravity of at least 1.24 as measured according to ASTM D792.

14. An article comprising the composition according to any of claims 1 to 13.

15. The article according to claim 14, wherein the article is a sheet having a thickness of 1 mm or lower, or wherein the article is a battery electrode plate, a bipolar plate of a fuel cell, or a sheet of a plate heat exchanger.

FIG. 1

FIG. 2

FIG. 3

FIG. 4

Melt Viscosity (Capillary Viscosity) at 1,000 1/s

FIG. 5

EP 4 506 409 A1

FIG. 6

FIG. 7

Europäisches
Patentamt

European
Patent Office

Office européen
des brevets

# EUROPEAN SEARCH REPORT

Application Number

EP 23 19 6481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 658 277 B1 (PINNACLE VRB LTD [AU]) 26 November 2003 (2003-11-26) * paragraphs [0003] - [0008]; claims; examples * | 1-15 | INV. C08L23/08 C08K3/04 H01M4/66 H01M8/0221 H01M18/0226 ADD. H01M6/18 |
| A | JP S63 2260 A (MEIDENSHA ELECTRIC MFG CO LTD) 7 January 1988 (1988-01-07) * claims; examples * | 1-15 | |
| A,D | WO 2022/195511 A1 (SHPP GLOBAL TECH BV [NL]) 22 September 2022 (2022-09-22) * paragraph [0049]; claims; examples * | 1-15 | |
| A | US 2014/162104 A1 (LEX PETER [US] ET AL) 12 June 2014 (2014-06-12) * claims; examples * | 1-15 | |
| A | JULIA A. KING ET AL: "Effects of carbon fillers in thermally conductive polypropylene based resins", POLYMER COMPOSITES, vol. 31, no. 3, 1 January 2009 (2009-01-01), pages NA-NA, XP055113822, ISSN: 0272-8397, DOI: 10.1002/pc.20830 * page 497 - page 498; table 9 * | 1-15 | TECHNICAL FIELDS SEARCHED (IPC) C08K C08L H01M |
| A | KING JULIA A. ET AL: "Electrical conductivity of carbon-filled polypropylene-based resins", JOURNAL OF APPLIED POLYMER SCIENCE, vol. 112, no. 1, 5 April 2009 (2009-04-05) , pages 425-433, XP093124702, US ISSN: 0021-8995, DOI: 10.1002/app.29422 * table VII * | 1-15 | |

The present search report has been drawn up for all claims

| Place of search | Date of completion of the search | Examiner |
|---|---|---|
| Munich | 29 January 2024 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6481

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | Publication date | Patent family member(s) | | | Publication date |
|---|---|---|---|---|---|---|
| EP 0658277 | B1 | 26-11-2003 | AT | E255279 | T1 | 15-12-2003 |
| | | | BR | 9307013 | A | 23-02-1999 |
| | | | CA | 2143751 | A1 | 17-03-1994 |
| | | | CN | 1086929 | A | 18-05-1994 |
| | | | DE | 69333316 | T2 | 30-09-2004 |
| | | | DK | 0658277 | T3 | 05-04-2004 |
| | | | EP | 0658277 | A1 | 21-06-1995 |
| | | | ES | 2211869 | T3 | 16-07-2004 |
| | | | HK | 1011463 | A1 | 09-07-1999 |
| | | | JP | H08501896 | A | 27-02-1996 |
| | | | KR | 950703801 | A | 20-09-1995 |
| | | | PT | 658277 | E | 30-04-2004 |
| | | | WO | 9406164 | A1 | 17-03-1994 |
| JP S632260 | A | 07-01-1988 | NONE | | | |
| WO 2022195511 | A1 | 22-09-2022 | CN | 117222701 | A | 12-12-2023 |
| | | | EP | 4308639 | A1 | 24-01-2024 |
| | | | KR | 20230159514 | A | 21-11-2023 |
| | | | WO | 2022195511 | A1 | 22-09-2022 |
| US 2014162104 | A1 | 12-06-2014 | AU | 2012298908 | A1 | 20-02-2014 |
| | | | BR | 112014003641 | A2 | 21-03-2017 |
| | | | CA | 2846112 | A1 | 28-02-2013 |
| | | | CN | 103828175 | A | 28-05-2014 |
| | | | CN | 108075145 | A | 25-05-2018 |
| | | | EP | 2748910 | A1 | 02-07-2014 |
| | | | JP | 6062944 | B2 | 18-01-2017 |
| | | | JP | 6207712 | B2 | 04-10-2017 |
| | | | JP | 2014529858 | A | 13-11-2014 |
| | | | JP | 2017107859 | A | 15-06-2017 |
| | | | KR | 20140060315 | A | 19-05-2014 |
| | | | KR | 20150008890 | A | 23-01-2015 |
| | | | KR | 20160086994 | A | 20-07-2016 |
| | | | KR | 20160087928 | A | 22-07-2016 |
| | | | KR | 20160087929 | A | 22-07-2016 |
| | | | RU | 2014105589 | A | 27-09-2015 |
| | | | RU | 2017103287 | A | 18-01-2019 |
| | | | US | 2012326672 | A1 | 27-12-2012 |
| | | | US | 2014162104 | A1 | 12-06-2014 |
| | | | WO | 2013028757 | A1 | 28-02-2013 |

EPO FORM P0459

For more details about this annex : see Official Journal of the European Patent Office, No. 12/82

EP 4 506 409 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 312812 A, Bradley
- US 4169816 A
- US 5173362 A
- WO 2022195511 A
- WO IB2023054050 A

**Non-patent literature cited in the description**

- **PAUL C. BUTLER et al.** Zinc/Bromine Batteries. *Report No. SAND2000-0893*, 2000, 37-1, 3, 6